# EUROPEAN PATENT APPLICATION

(11) **EP 2 098 769 A2**
(43) Date of publication of application: **09.09.2009**
(21) Application number: 09002328.4
(22) Date of filing: 19.02.2009
(51) Int. Cl.: F16L 9/02

(54) **Pipe for hydraulic systems of cars**

(30) Priority: 07.03.2008 IT MI20080379
(71) Applicant: Meccanica Finnord S.P.a., 21016 Luino (VA) (IT)
(72) Inventor: Piccinali, Eugenio, 21016 Luino (VA) (IT)
(74) Representative: La Ciura, Salvatore

(57) **Abstract**

Pipe for hydraulic systems of cars, particularly for a hydraulic clutch actuating system, characterized in that it has a single-layer wall (2) with an aluminum-based corrosion-proofing coating (3).
The self-protecting properties of the aluminum oxide that forms at the surface of this coating allow the pipe to pass the corrosion tests imposed by major European car manufacturers.

## Description

The present invention provides a novel pipe for hydraulic systems of cars, particularly for a hydraulic clutch actuating system, **characterized in that** it has a single-layer wall with an aluminum-based corrosion-proofing coating.

The self-protecting properties of the aluminum oxide that forms at the surface of this coating allow the pipe to pass the corrosion tests imposed by major European car manufacturers, such as Fiat, PSA and Renault.

In the automotive industry, hydraulic brake and clutch system pipes are known to have a double-layer wall treated by electrogalvanizing and passivation in a chromium bath.

While the tubes so obtained are efficient in terms of both mechanical strength and corrosion resistance, their production has not been allowed since 1 st July 2007, due to the European Directive 2005/53/CE, which forbids the production of items containing hexavalent chromium and other heavy metals that are deemed to be noxious for human health.

As a result of passivation, the corrosion proofing layer of these pipes of the prior art contains a non negligible amount of hexavalent chromium (Cr VI), which is forbidden by the above mentioned standard.

In an attempt to obviate this problem, the passivation treatment was carried out using trivalent chromium (Cr III), which is definitely less dangerous than hexavalent chromium and whose use is currently allowed.

The problem of this type of corrosion proofing coating is that it does not meet car manufacturer requirements, particularly concerning resistance to salt-fog corrosion tests, with pieces being immersed for hours in a high-humidity environment with a high salt content, and often at a high temperature.

Another alternative was the introduction of a double-walled pipe subjected to galvanized corrosion-proofing treatment and having a polymeric coating such as polyamide (nylon) or the like.

While this solution ensures good corrosion resistance performances, it still suffers from the economic drawback of involving an increase of manufacturing costs as it requires the nylon layer to be removed from both ends at the end of the processing cycle, in view of further forming steps for mounting fittings or the like.

The present invention relates to the above described art, and provides a pipe for hydraulic systems of cars, particularly for a hydraulic clutch actuating system, **characterized in that** it has a single-layer wall with an aluminum-based corrosion-proofing coating.

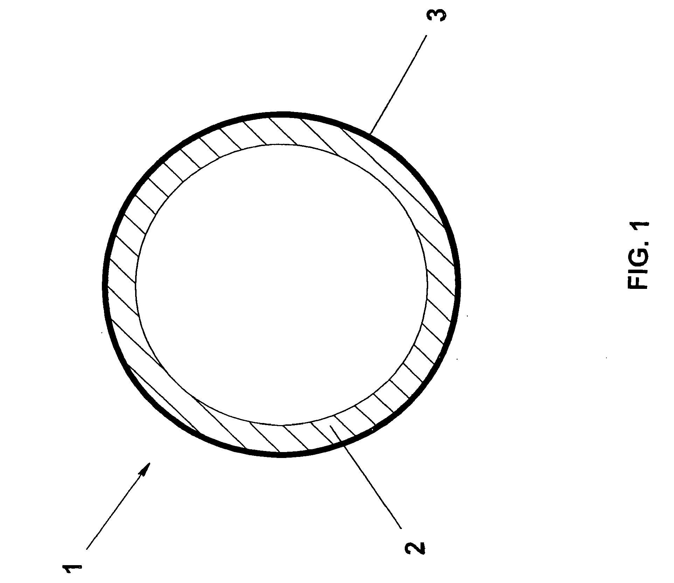

One embodiment of the invention will be now described with reference to the annexed Figure 1, which shows a cross sectional view of the pipe for a hydraulic motor vehicle clutch system.

Referring to the figure, the pipe 1 has a single inner wall 2 made of copper alloy and steel having a thickness of about 0.7-0.8 mm, coated with an aluminum layer 3, having a thickness of about 100 micron.

The inner wall is the structural element that is designed to withstand the internal pressure of the system; here, with a pipe designed for hydraulic clutch systems, a single wall is certainly sufficient to ensure resistance to a pressure of about 40-50 bar, as typically required in these applications.

The layer 3 is deposited by hot aluminizing, i.e. is formed by dipping the pipe into electrolytic baths containing aluminum oxide dissolved in acid solutions.

Aluminum was chosen for its natural tendency to protect itself from corrosive atmosphere; a thin layer of aluminum oxide Al₂O₃, also known as alumina, forms on the surface in contact with air, and is characterized both by high hardness and by excellent corrosion resistance, allowing the component to be directly used with no further treatment, such as passivation.

Therefore, these characteristics allow the pipe so treated to pass the corrosion tests imposed by car manufacturers, and particularly the salt-fog corrosion test, which is carried out in saline humidity saturated environments.

Therefore, the present invention provides a pipe for hydraulic clutch actuating systems of motor vehicles, that can both comply with the strict environmental standards and tests imposed by car manufacturers and afford considerable economic advantages in that the single wall design requires considerably lower manufacturing costs as compared with traditional double-walled pipes.

Those of ordinary skill in the art may also envisage a number of changes or variants, that shall be deemed to fall within the scope of the present invention.

## Claims

1. A pipe for hydraulic systems of cars, particularly for a hydraulic clutch actuating system, **characterized in that** it has a single-layer wall with an aluminum-based corrosion-proofing coating.

2. A pipe for hydraulic systems of cars as claimed in claim 1, **characterized in that** the inner wall is made of a copper alloy and steel and has a thickness of about 0.7-0.8 mm.

3. A pipe for hydraulic systems of cars as claimed in claim 1, **characterized in that** the aluminum corrosion-proof coating has a thickness of about 100 micron.

4. A system for motor vehicles, particularly a hydraulic clutch actuating system, comprising one or more pipes as claimed in any one of the preceding claims, having an inner wall made of a copper alloy and steel and an aluminum corrosion-proof coating.
